# EUROPÄISCHE PATENTSCHRIFT

(11) **EP 2 140 164 B1**
(45) Veröffentlichungstag und Bekanntmachung des Hinweises auf die Patenterteilung: **18.08.2010**
(21) Anmeldenummer: 08734809.0
(22) Anmeldetag: 27.03.2008
(51) Int. Cl.: F16D 55/28, F16D 59/02

(54) **DISTANZELEMENT UND BREMSVORRICHTUNG**
SPACER ELEMENT AND BRAKING DEVICE
ÉLÉMENT D'ÉCARTEMENT ET DISPOSITIF DE FREINAGE

(30) Priorität: 27.03.2007 DE 102007014654
(43) Veröffentlichungstag der Anmeldung: 06.01.2010
(73) Patentinhaber: Pintsch Bubenzer GmbH, 57548 Kirchen-Wehbach (DE)
(72) Erfinder: TREUDE, Hans-Walter, 57234 Wilnsdorf (DE)
(74) Vertreter: Samson & Partner
(86) Internationale Anmeldenummer: PCT/EP2008/002422
(87) Internationale Veröffentlichungsnummer: WO 2008/116651

(56) Entgegenhaltungen:
- WO-A-02/066852
- WO-A-2005/038287
- DE-A1- 3 338 289
- DE-A1- 19 819 141
- DE-C1- 19 737 485

## Beschreibung

Die Erfindung betrifft eine Bremsvorrichtung mit einem Distanzelement.

Bekannte Bremsvorrichtungen dienen auch als Sicherheitsbremsen. Solche Sicherheitsbremsen sind oft als sogenannte elektromagnetische Federdruckbremsen ausgebildet, bei denen die Bremsscheibenanordnung unter Federwirkung zwischen zwei Bremsflanschen eingeklemmt wird. Die Bremsscheibenanordnung sitzt dabei drehfest auf einem Wellenende, das beispielsweise mit einem abzubremsenden Elektromotor oder einem Getriebe gekoppelt ist.

Zum Lösen (Lüften) der Bremse wird die Bremswirkung meist elektromagnetisch aufgehoben und die Bremsscheibenanordnung freigestellt. Solche Bremsen sind beispielsweise aus der EP-A-1 452 764 bzw. der DE-U-85 19 223 bekannt. Bei diesen Bremsen sind die Bremsscheiben mit Bremsbelägen belegt, die in üblicher Weise auf den Radialflächen der Bremsscheibe befestigt sind (zum Beispiel durch Löten, Kleben oder mechanische Befestigungselemente wie Nieten oder Schrauben). Solche Bremsscheiben müssen bei abgenutzten Bremsbelägen vollständig ausgetauscht werden. Das heißt, selbst wenn nur die Bremsbeläge abgenutzt sind und die eigentliche Bremsscheibe noch völlig intakt ist, muss dieses Bauteil erneuert werden. Bremsscheibenanordnungen mit abgenutzten Bremsbelägen können zwar durch Ersetzen der abgenutzten Beläge durch neue Beläge wieder aufbereitet werden. Dies ist jedoch aufwendig, da Lötstellen gelöst und nachbearbeitet werden müssen bzw. schwer lösbare Befestigungselemente (Nieten) entfernt werden müssen. Eine solche Bremsbelaganordnung ist in der Regel auch nur für eine begrenzte Anzahl von Wiederaufbereitungszyklen geeignet.

Ein weiteres Problem besteht darin, dass die Bremsscheibenanordnung möglichst schwimmend zwischen den Bremsflanschen, d.h. in axialer Richtung beweglich auf dem abzubremsenden Wellenende angeordnet sein muss. Nur so kann sichergestellt werden, dass insbesondere bei stärker abgenutzten Bremsbelägen auf beiden Bremsscheibenseiten eine gleichmäßige Bremswirkung erzielt werden kann. Es sind also relativ genaue und aufwendige Welle-Nabe-Verbindungen zwischen Bremsscheibe und dem Wellenende erforderlich, die so eine Axialverschiebung zulassen.

Aus der DE 197 37 485 C1 sind Bremsbelagelemente bekannt, die in die Bremsscheibe durchsetzenden Öffnungen axial zur Drehachse der Bremsscheibe bewegbar angeordnet sind und so eine axial bewegliche Welle-Nabe-Verbindung ersetzen.

Durch den Verschleiß der aktiven Bremsflächen an den Bremsflanschen und insbesondere der Bremsbeläge selbst verändert sich mit zunehmender Betriebsdauer der beim Bremsen zu überwindende Lüftspalt; er wird größer. Damit erhöht sich die Einfallzeit einer solchen Bremse und die Bremswirkung verzögert sich mit zunehmendem Verschleiß. Um dies auszugleichen, können verstellbare Anschläge vorgesehen werden, die den Lüftspalt festlegen. Bei ringförmigen Bremselementen müssen jedoch in der Regel mehrere solcher Anschläge in sehr genau definierter Weise verstellt werden, um über den gesamten Wirkbereich (in Umfangsrichtung) der Bremselemente konstante Bremseigenschaften und damit einen konstanten Verschleiß zu gewährleisten. Die Einzelverstellung der Anschläge ist meist vor Ort - also bei montierter Bremse - nicht oder nur sehr schwer möglich.

Um das Nachstellen zu vereinfachen, sind z.B. aus der DD 148 250 als Stufenscheiben ausgebildete Nachstellungen bekannt, die über den Umfang der Bremselemente (Bremsflansche, Bremsscheibe) verteilt werden. Die Stufenscheiben weisen an ihrem Umfang unterschiedlich dicke Randabschnitte auf, die beispielsweise zwischen Magnettopf und dem Bremsgehäuse eingeklemmt werden, um die Stärke des Lüftspalts festzulegen. Diese sog. Stufenscheiben müssen jedoch einzeln gelöst, verstellt und fixiert werden. Dabei besteht die Gefahr falscher Einstellungen bzw. die Gefahr, dass an verschiedenen Stufenscheiben unterschiedlich starke Randbereiche eingestellt werden.

Aus der DE 33 38 289 A1 ist eine Verschleißnachstellung bekannt, bei der ein über ein Gewinde axial verstellbarer Gehäusedeckel, der gleichzeitig als Bremsbelagträger dient. Bremsbelagverschleiß ist ausgleichbar, indem der Deckel entweder weiter auf das Gehäuse auf oder von diesem abgeschraubt werden. Über Arretierschrauben ist der Deckel in einer stufenlos wählbaren Drehstellung arretierbar.

Davon ausgehend besteht die Aufgabe der vorliegenden Erfindung darin, eine Bremsscheibenanordnung bzw. eine Bremsanordnung bereitzustellen, bei der die Verschleiß-, die Wartungs- und die Justiereigenschaften wenigstens teilweise verbessert sind.

Diese Aufgabe löst die Bremsvorrichtung gemäß Anspruch 1 mit einem Distanzelement oder Stellelement, über das ohne Demontage der Bremsvorrichtung der Verschleiß stufenweise ausgeglichen werden kann. Das verstellbare Distanzelement, das in einer Stellung zwischen Bremsflansch und dem Anschlag wirkt, kann den Lüftspalt um eine bestimmte Dimension D verringern und so einen entsprechenden Verschleiß der Bremsbelagelemente ausgleichen. Damit kann der Lüft- bzw. Bremsspalt stufenweise und ohne aufwendige Einstellarbeiten dem Verschleiß entsprechend nachjustiert werden. Gleichzeitig erhöht diese Maßnahme die Lebensdauer bzw. die Betriebsdauer der Bremsbelagelemente, und die erforderlichen Wartungsintervalle zum Austausch der Bremselemente werden verlängert. Dies wiederum senkt die Betriebskosten einer entsprechenden Bremsvorrichtung.

Gemäß Anspruch 2 wirkt ein einziges Distanzelement mit seinen Randbereichen zwischen allen Anschlägen und dem entsprechenden Bremsflansch. Die Bremsvorrichtung kann in einem einzigen Arbeitsgang dem Verschleiß entsprechend nachgestellt werden.

Gemäß Anspruch 3 ist eine Fixierung vorgesehen, die das Distanzelement in seiner ersten und/oder zweiten Stellung am Bremsflansch fixiert.

Gemäß Anspruch 4 ist das Distanzelement in einer Stellrichtung zu verstellen, die quer zu einer in Bremskraftrichtung verlaufenden Achse verläuft. Das heißt zum Verstellen wird das Distanzelement einfach auf dem Bremsflansch verschoben. Dabei ist das Distanzelement gemäß Anspruch 5 als um die Achse 14 - also in Umfangsrichtung - verstellbarer Drehring ausgebildet.

Nach Anspruch 6 sind die Bremsbelagelemente in die Bremsscheibe durchsetzenden Öffnungen angeordnet sind. Das heißt, die Bremsbeläge sind nicht mehr auf bzw. an der Oberfläche der Radialflächen der Bremsscheibe angeordnet, sondern ragen jeweils beidseitig axial aus entsprechenden Öffnungen in der Bremsscheibe heraus. Die Öffnungen umfassen dabei die Bremsbelagelemente ganz oder teilweise, so dass diese formschlüssig radial und in Umfangsrichtung zur Bremsscheibe fixiert sind. Die Stirnflächen an den aus den Bremsscheibenoberflächen herausragenden Enden der Bremsbelagelemente wirken als Bremsflächen an den entsprechenden Gegenflächen der Bremsflansche. Die axiale Bremskraft erzeugt eine verzögernde Reibkraft in Umfangsrichtung an den Grenzflächen, die über die Bremsscheibe auf das abzubremsende Wellenende übertragen wird. Bei Verschleiß der Bremsbelagelemente muss nicht die gesamte Bremsscheibe ausgetauscht werden, sondern es genügt, die verschlissenen Bremsbelagelemente gegen neue Bremsbelagelemente zu ersetzen.

Dabei erlaubt die Ausführung gemäß Anspruch 7, bei der die Bremsbelagelemente in Richtung der Bremskraft verschieblich angeordnet sind, eine montagetechnisch besonders günstige Ausführung. Die Bremsbelagelemente sind nämlich "schwimmend" und selbstzentrierend in der Bremsscheibe angeordnet und richten sich an den auf sie einwirkenden Bremsflanschen aus, und zwar weitgehend unabhängig von der axialen Lage der Bremsscheibe selbst. Die Bremsscheibe kann also mit relativ großen axialen Toleranzen am abzubremsenden Wellenende fixiert werden.

Die Ausführung gemäß Anspruch 8 erlaubt eine besonders gute Kraftübertragung zwischen Bremsbelagelementen und Bremsscheibe. Und die spezielle Ausführung gemäß Anspruch 9 eine fertigungstechnisch besonders günstige Form. Dabei können sowohl die Bremsbelagelemente als auch die aufnehmenden Öffnungen in der Bremsscheibe besonders einfach und genau tolerierbar ausgeführt werden. Gleichzeitig ermöglicht die Nierenform eine große Bremswirkfläche mit vergleichsweise wenigen Bremselementen.

Ein weiterer Vorteil der angegebenen Bremsscheibenanordnungen besteht darin, dass sie praktisch in jeder Lage eingebaut werden können, d.h. die Achse kann waagerecht, schräg oder senkrecht verlaufen. Es ist trotzdem sichergestellt, dass sich die Bremsbelagelemente auch bei gelöster Bremse nicht oder nur minimal an den Bremsflanschen schleifen. Dieser Effekt wird dadurch erzielt, dass beim Lösen der Bremse die Bremsscheibe wieder in Rotation versetzt wird, dabei werden die in den Öffnungen angeordneten Bremsbelagelemente durch die Zentrifugalkraft nach außen in die entsprechenden Aufnahmeöffnungen gedrückt. Die auftretende Zentrifugalkraft bewirkt eine so starke Reibkopplung zwischen Bremsscheibenöffnungen und Bremsbelagelementen, dass sich diese unter ihrem Eigengewicht nicht mehr in axialer Richtung in den Öffnungen verschieben können. Damit ist sichergestellt, dass die Bremsbelagelemente bei ungebremstem Betrieb, also bei gelüfteter Bremse, an den Bremsflanschen anliegen. Dieser Effekt ist durch eine verschieblich auf einem Wellenende angeordnete Bremsscheibe und an der Bremsscheibe bzw. den Bremsflanschen fixierten Bremsbelägen nicht erzielbar, da hier zwischen der Bremsscheibennabe und der angetriebenen Welle keine stabilisierenden Zentrifugalkräfte wirken.

Bei weiteren Ausführungen werden die bremsflanschseitig wirkenden Kräfte in Umfangsrichtung über Führungselemente kraftschlüssig auf einen Grundkörper übertragen, welcher sich wiederum an einem gegenüber dem abzubremsenden Wellenende fixierten Gehäuse abstützen kann. Die Bremskraft selbst wird über eine Federanordnung aufgebracht, der eine Magnetkraft entgegenwirkt, die über eine entsprechende Ankerringanordnung aufgebracht wird.

Zusätzlich kann eine Federanordnung zwischen den beiden Bremsflanschen vorgesehen, die diese bei gelüfteter Bremsvorrichtung auseinanderdrückt und somit die Stirnflächen der Bremsbelagelemente unabhängig von der Einbaulage der Bremsvorrichtung freilegt.

Ein Ausführungsbeispiel der vorliegenden Erfindung wird nun anhand der Zeichnungen beschrieben. Dabei zeigen:
- Fig. 1: eine Vorderansicht einer erfindungsgemä- ßen Bremsvorrichtung,
- Fig. 2: den Schnitt A-A aus Fig. 1,
- Fig. 3: den Schnitts B-B aus Fig. 1,
- Fig. 4: eine perspektivische Ansicht einer Brems- scheibe mit Bremskörpern,
- Fig. 5: eine vergrößerte Darstellung des Bereichs C aus Fig. 2,
- Fig. 6: eine alternative Bremsvorrichtung,
- Fig. 7: den Schnitts D-D aus Fig. 6 und
- Fig. 8: einen alternativen Verstellbereich.

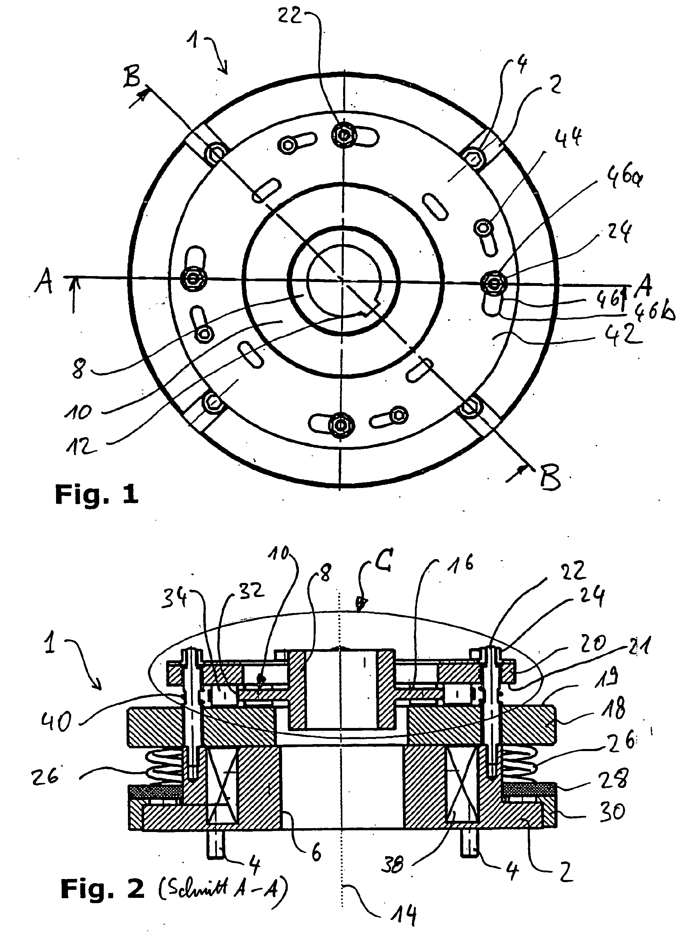

Aufbau und Funktion einer erfindungsgemäßen Bremsvorrichtung sind in den Fig. 1 bis 5 zu erkennen. Die Bremsvorrichtung 1 ist über einen Grundkörper 2 und Befestigungsschrauben 4 an das Gehäuse einer Antriebseinheit anflanschbar (Gehäuse und Antriebseinheit sind nicht dargestellt). Durch eine zentrale Durchgangsöffnung 6 im Grundkörper 2 ragt ein Wellenende (nicht dargestellt) aus der Antriebseinheit durch den Grundkörper 2 hindurch in die Nabe 8 der Bremsscheibe 10, die über eine Passfederverbindung 12 drehfest mit dem Wellenende verbunden ist. Über eine geeignete Fixierung ist die Bremsscheibe ebenfalls in axialer Richtung der Hauptachse 14 auf dem Wellenende festgelegt. Die Bremsscheibe 10 liegt mit ihrem Flanschbereich 16 zwischen den Bremsflanschen 18 und 20, die koaxial zum Grundkörper 2 angeordnet sind.

Die Bremsflansche 18 und 20 sitzen axial verschieblich auf Stehbolzen 22, die über Gewinde im Grundkörper 2 fixiert sind. Der axiale Bewegungsbereich der Bremsflansche 18 und 20 wird zum einen durch die Getriebe-abgewandte Stirnseite des Grundkörpers 2 und die dem Getriebe zugewandten Stirnflächen der Anschlagmuttern 24 festgelegt.

Zum Aufbringen der Bremskraft sind Bremsfedern 26 vorgesehen, die sich zwischen der Druckplatte 28 und dem Bremsflansch 18 abstutzen. Die Lage der Bremsfedern 26 ist durch entsprechende Ausnehmungen (nicht dargestellt) in der Druckplatte 28 bzw. im Bremsflansch 18 vorgegeben. Die axiale Lage der Druckplatte 28 ist über eine Verstellmutter 30, die über ein Gewinde mit dem Grundkörper 2 gekoppelt ist, verstellbar. Zur Sicherung der axialen Verstelllage der Verstellmutter 30 können geeignete Fixierelemente (zum Beispiel Schrauben) vorgesehen sein. Die Bremskraft ist über die axiale Verstellung der Verstellmutter 30 und damit der Druckplatte 28 einstellbar, indem die Vorspannung der Bremsfedern entsprechend verändert wird.

Im Flanschbereich 16 sind mehrere Durchgangsbohrungen 32 vorgesehen, in die zylindrische Bremsbelagelemente 34 eingesetzt sind. Die Stirnflächen der Bremsbelagelemente verlaufen dabei zwischen den einander zugewandten Radialflächen 19 und 21 der Bremsflansche 18 und 20. Diese Radialflächen 19 und 21 bilden zusammen mit den Stirnflächen die Reibpaarungen, die zur Bremswirkung führen.

Beim Bremsen drücken die Bremsfedern 26 den Flansch 18 axial mit seiner Radialfläche 19 gegen die entsprechenden Stirnflächen der Bremsbelagelemente 34. Diese wiederum übertragen die Bremskraft über ihre gegenüberliegenden Stirnflächen auf die Stirnfläche 21 des Bremsflansches 20, der sich an den Stirnflächen der Anschlagmuttern 24 abstützt, die wiederum die Bremskraft über eine Zugbeanspruchung der Stehbolzen 22 auf den Grundkörper 2 überträgt.

Beim Bremsen können sich die Bremsbelagelemente 34 in den Durchgangsbohrungen 32 axial verschieben, so dass keine Axialkräfte auf den Flanschbereich 16 der Bremsscheibe 10 übertragen werden. Die Bremsbelagelemente 34 sind so zwischen den Bremsflanschen 18 und 20 eingeklemmt und legen damit über ihre Umfangsflächen, die formschlüssig mit den Durchgangsbohrungen 32 des Flanschbereichs 16 der Bremsscheibe 10 gekoppelt sind, die Bremsscheibe 10 und damit über die Nabe 8 und die Passfederverbindung 12 das abzubremsende Wellenende fest.

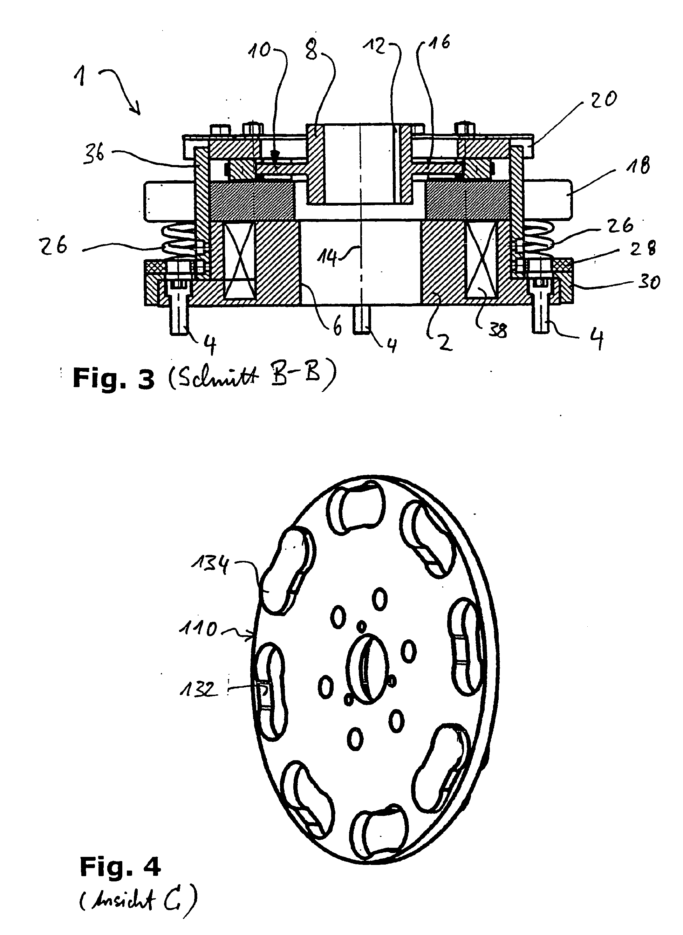

Die dabei auftretenden Umfangskräfte an den Bremsflanschen 18 und 20 werden über Verdrehsicherungen 36 (Fig. 3), die mit dem Grundkörper 2 verschraubt sind, auf den Grundkörper 2 und über die Befestigungsschrauben 4 auf das Getriebegehäuse übertragen. Die Stehbolzen 22 und die entsprechenden Durchgangsbohrungen in den Bremsflanschen 18 und 20 sind dabei so dimensioniert, dass hier keine Umfangskräfte übertragen werden. Das heißt, die Stehbolzen 22 übertragen nur die eigentliche Bremskraft in axialer Richtung, während das resultierende Bremsmoment über die Verdrehsicherungen 36 übertragen wird.

Zum Lüften der Bremse ist im Grundkörper 2 eine elektrisch erregbare Ankerspule 38 vorgesehen, die beim Anlegen einer entsprechenden Spannung den Grundkörper 2 so magnetisiert, dass dieser den Bremsflansch 18 unter Überwindung der Bremskraft anzieht und die Reibwirkung zwischen den Radialflächen 19 und 21 und den Bremsbelagelementen aufhebt. Dabei sind zwischen den Bremsflanschen 18 und 20 die Stehbolzen 22 umgebende Schraubenfedern 40 vorgesehen, die bei gelöster (gelüfteter Bremse) den Bremsflansch 20 gegen die Anschlagmuttern 24 drückt. Der Bremsflansch 20 nimmt damit unabhängig vom Betriebszustand (gebremst, gelöst) und von der Einbaulage der Bremsvorrichtung 1 immer eine definierte axiale Lage an den Anschlagmuttern 24 ein.

Bei gelöster Bremse wird die Bremsscheibe 10 über das angetriebene Wellenende wieder in Rotation versetzt. Dadurch werden die Bremsbelagelemente 34 durch die auftretenden Zentrifugalkräfte nach außen in die Durchgangsbohrungen 32 gedrückt. Der so aufgebaute Reibschluss verhindert eine Axialbewegung der Bremsbelagelemente 34 in den Durchgangsbohrungen 32. Das heißt, die Bremsvorrichtung 1 kann in jeder beliebigen Lage eingebaut werden, ohne dass sich die Brems- bzw. Verschleißeigenschaften durch unterschiedliche Stellungen der Bremsbelagelemente 34 zu den Bremsflanschen 18 und 20 bzw. deren Radialflächen 19 und 21 verändern würde.

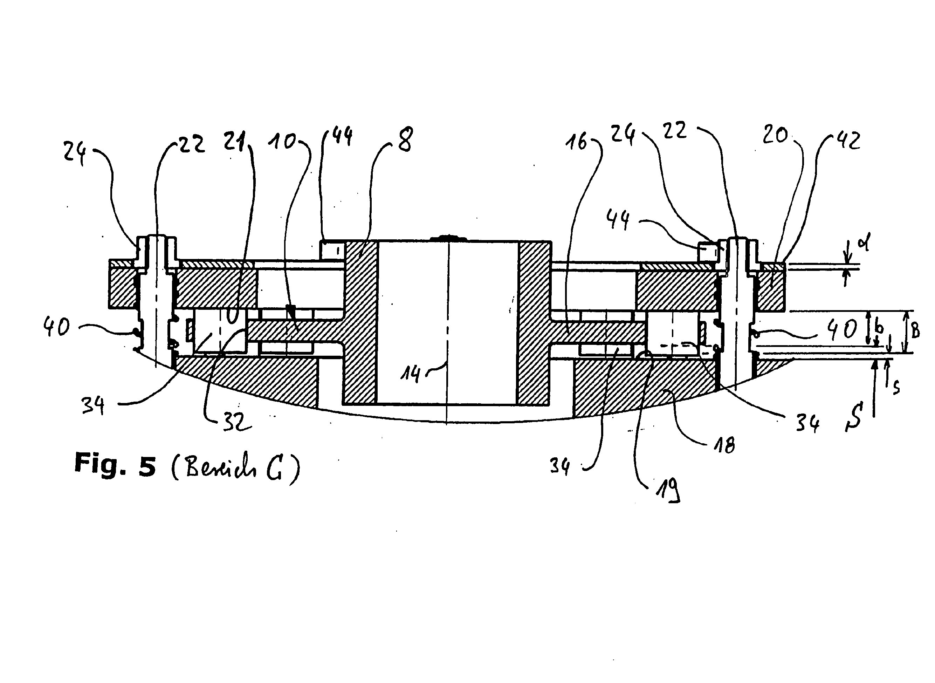

Mit zunehmender Betriebsdauer der Bremsvorrichtung nutzen sich die Bremsbelagelemente 34 ab. Das heißt, der ursprüngliche Abstand B zwischen den Stirnflächen verringert sich mit der Zeit auf den Abstand b. Damit wird der ursprüngliche Bremsspalt s größer und wächst auf den Betrag S (siehe Fig. 5). Durch diesen Effekt wird der Bremsweg verlängert und die Bremsfedern 26 müssen sich weiter ausdehnen, um den Bremsspalt S zu überwinden. Damit nimmt die Bremskraft ab und die Einfallzeit der Bremse wird erhöht. Beide Effekte sind unerwünscht.

Zum Ausgleich ist an der Außenfläche des Bremsflansches 21 ein verstellbarer Distanzring 42 angeordnet, der über Befestigungsschrauben 44 am Bremsflansch anliegend befestigt ist. Im Distanzring 42 sind schlüssellochartig ausgebildete Ausnehmungen 46 vorgesehen, die in ihrer Ausgangslage (bei neuen Bremsbelagelementen 34) mit ihrem weiten Abschnitt 46a die Anschlagmuttern 24 umgeben. In dieser Stellung stützt sich der Bremsflansch 20 mit seiner außenliegenden Radialfläche im Bereich der Stehbolzen 22 direkt an der Anschlagmutter 24 ab.

Bei zunehmendem Verschleiß der Bremsbelagelemente 34 kann bei stillstehender Antriebswelle und gelüfteter Bremse der Distanzring 42 über die Befestigungselemente 44 gelöst werden. Anschließend wird der Bremsflansch 20 zusammen mit dem Distanzring 42 unter Überwindung der durch die Schraubenfedern 40 aufgebrachten Spreizkraft nach innen gedrückt. Dabei verschieben sich ebenfalls die Bremsbelagelemente 34 axial in den Durchgangsbohrungen 32 und verringern den Lüftspalt zum Bremsflansch 18. Bei entsprechender Abnutzung ist eine Axialverschiebung so weit möglich, dass der Distanzring 42 mit seiner außenliegenden Radialfläche vollständig so weit "unter" die Anschlagmuttern 24 gelangt, dass der Distanzring 42 in Umfangsrichtung verdrehbar ist, so dass sein enger Abschnitt 46b unter die Anschlagmuttern 24 verschoben werden kann. In dieser Stellung werden die Befestigungselemente 44 wieder fixiert und der Distanzring ist wieder am Bremsflansch 20 befestigt. In dieser Stellung befindet sich der Distanzring 42 zwischen Anschlagmuttern 24 und Bremsflansch 20 und der Lüftspalt ist um die Dimension D (die Dicke des Distanzrings 42) verringert. Diese Nachstellmöglichkeit erlaubt eine schrittweise Kompensation der Abnutzung der Bremsbelagelemente 34, ohne dass dazu die Vorspannung der Bremsfedern 26 nachgestellt oder verändert werden müsste und ohne dass die Anschlagmuttern 24 verstellt werden müssten.

Im dargestellten Ausführungsbeispiel ist der Distanzring 42 in Umfangsrichtung verdrehbar ausgebildet. In anderen Ausführungen kann auch anstatt des Distanzrings 42 ein Distanzelement (nicht dargestellt) vorgesehen werden, das quer zur Rotationsachse 14 verschiebbar ausgebildet ist. So eine Ausführung ist unter Umständen im Betrieb leichter verstellbar.

Die in Fig. 4 dargestellte Bremsscheibe 110 zeigt eine alternative Ausführung der Bremsbelagelemente 134, die hier nicht zylindrisch sondern prismatisch, nierenförmig ausgebildet sind und in entsprechenden Durchgangsöffnungen 106 sitzen. Dadurch lässt sich bei gleicher Anzahl der Bremselemente 134 die wirksame Reibfläche erhöhen. In anderen Ausführungen sind andere Querschnittsformen der Bremsbelagelemente realisierbar.

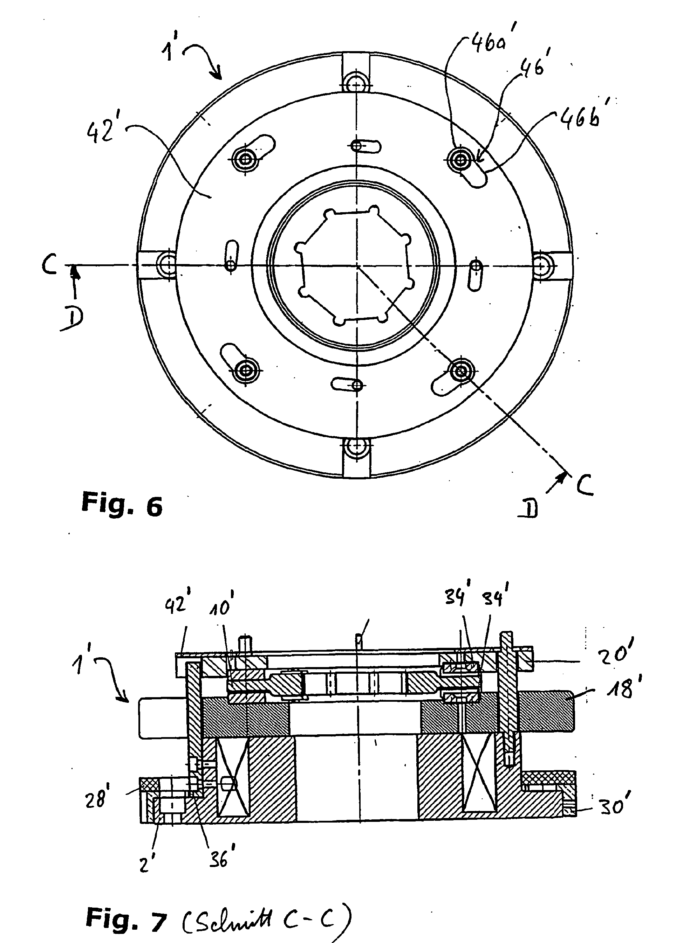

Die in den Fig. 6 und 7 gezeigte Ausführung betrifft eine Bremsvorrichtung 1', bei der an den Bremsflanschen 18' und 20' jeweils Bremsbeläge 34' angeordnet sind, die auf eine unbeschichtete Bremsscheibe 10' wirken. Diese Ausführung zeigt auch eine alternative Kopplung der Bremsscheibe 10' über einen Vielkant mit dem Wellenende. Bei dieser Ausführung muss jedoch die Bremsscheibe 10' selbst axial verschieblich auf dem Wellenende angeordnet sein, um Zwangskräfte beim Bremsen zu verhindern. Der Abnutzungsausgleich erfolgt auch hier analog über einen entsprechenden Distanzring 42', d.h. der Ausgleichsmechanismus ist für Bremsvorrichtungen 1' geeignet, die keine axial verschieblichen Bremsbelagelemente 34, 134 aufweisen.

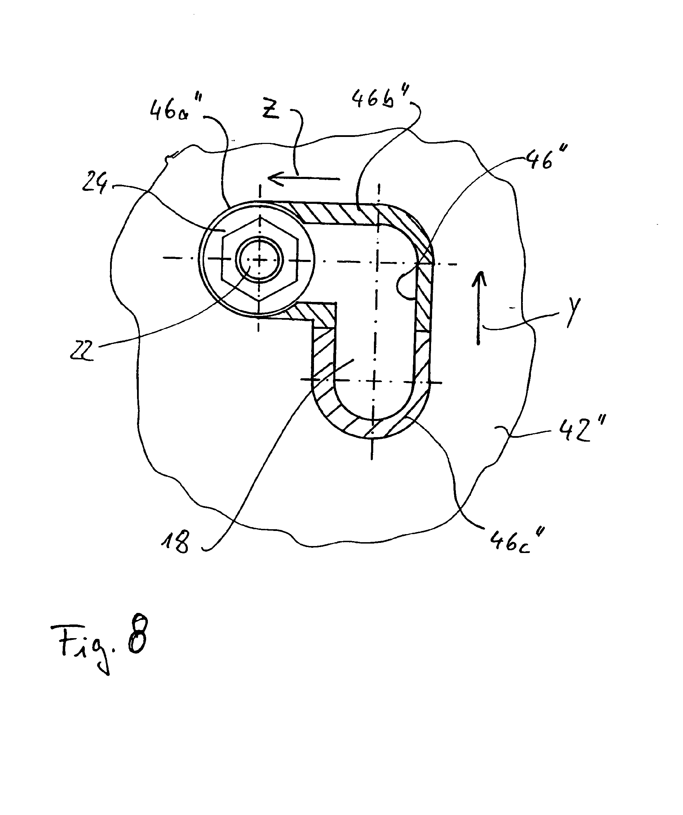

Fig. 8 zeigt eines von mehreren Verstellbereichen eines Distanzelements 42" mit einer rechtwinklig verlaufenden Öffnung 46". Bei dieser Ausführung kann eine mehrstufige Nachstellung auch mit einem quer zur Drehachse linear verstellbaren Distanzelement 42" realisiert werden. Bei diesem Distanzstück 42" ist beispielsweise die Ausnehmung 46" als winkelförmige Führungskulisse des Stehbolzens 22 ausgebildet, so dass ein Verschieben in zwei unterschiedliche Richtungen (quer zur Drehachse) nacheinander möglich ist. Dabei kann in eine erste Verschiebrichtung Z ein erster Ausgleich stattfinden und in eine zweite Verschiebrichtung Y (senkrecht zur ersten) ein zweiter Ausgleich stattfinden. Diese Ausführung erlaubt eine zweistufige definierte Nachstellung, bei welcher der jeweilige Nachstellvorgang jeweils durch einen definierten Verschiebeweg festgelegt wird.

Die Nachstellung erfolgt nacheinander aus der Stellung 1 (Fig. 8) in die Stellung 2 gegen den Anschlag des quer verlaufenden Abschnitts der Ausnehmung 42" und dann in Stellung 3 gegen das Ende dieser Ausnehmung. In Stellung 1 ist der Stehbolzen 22 und die Anschlagmutter 24 im Bereich der Ausnehmung 46a" angeordnet. In dieser Stellung wirkt das Distanzelement 42" nicht zwischen den Anschlagmuttern 24 und dem Flansch 18. Vielmehr liegt der Flansch 18 selber an der Anschlagmutter an.

In der Stellung 2 ist das Distanzelement 42" so zu den Stehbolzen 22 und den Anschlagmuttern 24 in Richtung Z verschoben, dass der Bereich 46b" unter der Anschlagmutter 24 angeordnet ist oder, in anderen Worten, zwischen dem Flansch 18 und der diesem zugewandten Fläche der Anschlagmutter 24 liegt. Der Bereich 46b" weist eine Stärke D auf, um die der Lüftspalt in dieser Stellung verringert ist.

Um eine weitere Nachstellung zu realisieren, wird das Distanzstück 42" aus der Stellung 2 in Richtung Y in die Stellung 3 verschoben. Dabei gelangt der Bereich 46c" unter die Anschlagmutter 24. Der Bereich 46c" weist eine Dicke D' auf, die größer ist als die Dicke D im Bereich 46b". Durch den zweiten Nachstellvorgang kann ein weiterer Verschleiß ausgeglichen werden und der Lüftspalt kann entsprechend nachgestellt werden. Der in Figur 8 dargestellte Stellbereich ist entsprechend an allen Anschlagelementen 22, 24 ausgebildet.

In anderen Ausführungen kann auch der Distanzring 42, 42' im Bereich der Öffnungen 46, 46' auch gestuft ausgebildet sein, so dass die Lüftspaltnachstellung in mehreren Schritten erfolgen kann. Es können auch Distanzringe 42, 42' mit unterschiedlichen Stärken D verwendet werden, die ggf. auch kombiniert einsetzbar sind.

Weitere Ausführungen und Varianten der vorliegenden Erfindung ergeben sich im Rahmen der anhängenden Ansprüche.

## Patentansprüche

1. Bremsvorrichtung (1, 1') mit einer Bremsschreibenanordnung, bei welcher Bremsbelagelemente (34; 134; 34') zwischen einem ersten und zweiten Bremsflansch (18, 20; 18', 20') angeordnet sind und ein Lüftspalt (S) über mehrere Anschläge (22, 24) einstellbar ist, und einem Distanzelement (42; 42'; 42"), welches quer zur Bremskraftrichtung verstellbar und in Richtung des Lüftspalts wirkend einstellbar ist, **dadurch gekennzeichnet, dass** das Distanzelement (42; 42'; 42") so ausgebildet ist, dass es zwischen einer ersten, nicht am Anschlag (22, 24; 22', 24') wirkenden und einer zweiten zwischen Anschlag (22, 24; 22', 24') und Bremsflansch (18, 20; 18', 20') in Bremskraftrichtung bzw. Richtung des Lüftspalts wirkenden Stellung verstellbar ist, so dass in seiner zweiten Stellung der Lüftspalt (S) um eine Dimension (D; D') des Distanzelements verringert wird, und so ein entsprechender Verschleiß eines Bremsbelagelements (34; 134; 34') ausgleichbar ist.

2. Bremsvorrichtung (1, 1') nach Anspruch 1, bei welcher das Distanzelement (42; 42'; 42") einstückig ausgebildet ist und jeweils eine Ausnehmung (46; 46'; 46") im Bereich der Anschläge (22, 24) aufweist, wobei die Ausnehmungen (46; 46'; 46") in der ersten Stellung die Anschläge (22, 24) mit einem Bereich (46a; 46a'; 46a") umgeben und der zweiten Stellung ein Randbereich (46b; 46b'; 46b"; 46c") der Ausnehmung (46; 46'; 46") mit der Dicke (D; D') axial zwischen Anschlag (22, 24) und Bremsflansch (18, 20; 18', 20') angeordnet ist.

3. Bremsvorrichtung (1, 1') nach Anspruch 1 oder 2, bei welcher das Distanzelement (42; 42'; 42") so angeordnet und ausgebildet ist, dass es zur Fixierung über ein Befestigungselement (44) in seiner ersten und/oder zweiten Stellung mit dem Bremsflansch (18, 20; 18', 20') koppelbar ist.

4. Bremsvorrichtung (1, 1') nach Anspruch 1,2 oder 3, bei welcher das Distanzelement (42; 42'; 42") in eine Stellrichtung (Y, Z) quer zu einer in Bremskraftrichtung verlaufenden Achse (14) verstellbar ausgebildet ist.

5. Bremsvorrichtung (1, 1') nach Anspruch 4 bei welcher das Distanzelement (42; 42'; 42") als um die Achse (14) verstellbarer Drehring (42; 42') ausgebildet ist.

6. Bremsvorrichtung (1,1') nach einem der Ansprüche 1 bis 5, welche eine Bremsscheibe (10, 110) mit mehreren Bremsbelagelementen (34; 134) aufweist, die in die Bremsscheibe (10, 110) durchsetzenden Öffnungen (32; 132) angeordnet sind.

7. Bremsvorrichtung (1, 1') nach Anspruch 6, bei welcher die Bremsbelagelemente (34; 134) in Richtung einer Bremskraft verschieblich angeordnet sind.

8. Bremsvorrichtung (1, 1') nach einem der Ansprüche 6 oder 7, bei welcher die Bremsbelagelemente (34; 134) und die Öffnungen (32; 132) eine einander entsprechende prismatische Gestalt aufweisen.

9. Bremsvorrichtung (1, 1') nach Anspruch 8, bei welcher die Bremsbelagelemente (34) nierenförmig ausgebildet sind.

## Claims

1. A braking device (1, 1') with a brake-disc arrangement in which brake-pad elements (34; 134; 34') are arranged between a first and a second brake flange (18, 20; 18', 20') and an air gap (S) is capable of being set by way of a plurality of stops (22, 24), and a spacer element (42; 42'; 42") which is adjustable transversely to the direction of the braking force and is capable of being set so as to act in the direction of the air gap, **characterized in that** the spacer element (42; 42'; 42") is designed in such a way that it is adjustable between a first position not acting upon the stop (22, 24; 22', 24') and a second position acting between the stop (22, 24; 22', 24') and the brake flange (18, 20; 18', 20') in the direction of the braking force and in the direction of the air gap respectively, so that in its second position the air gap (S) is reduced by a dimension (D; D') of the spacer element, and a corresponding wear of a brake-pad element (34; 134; 34') is capable of being compensated in this way.

2. A braking device (1, 1') according to claim 1, in which the spacer element (42; 42'; 42") is constructed in one piece and has one recess (46; 46'; 46") in each case in the region of the stops (22, 24), wherein the recesses (46; 46'; 46") in the first position surround the stops (22, 24) with a region (46a; 46a'; 46a") and in the second position an edge region (46b; 46b'; 46b"; 46c") of the recess (46; 46'; 46") with the thickness (D; D') is arranged axially between the stop (22, 24) and the brake flange (18, 20; 18', 20').

3. A braking device (1, 1') according to claim 1 or 2, in which the spacer element (42; 42'; 42") is arranged and designed in such a way that in its first and/or second position it is capable of being coupled to the brake flange (18, 20; 18', 20') by way of a fastening element (44) for fixing purposes.

4. A braking device (1, 1') according to claim 1, 2 or 3, in which the spacer element (42; 42'; 42") is designed to be adjustable in a setting direction (Y, Z) transversely to an axis (14) extending in the direction of the braking force.

5. A braking device (1, 1') according to claim 4, in which the spacer element (42; 42'; 42") is designed in the form of a turning ring (42; 42') adjustable about the axis (14).

6. A braking device (1, 1') according to any one of claims 1 to 5, which has a brake disc (10, 110) with a plurality of brake-pad elements (34; 134) which are arranged in openings (32; 132) passing through the brake disc (10, 110).

7. A braking device (1, 1') according to claim 6, in which the brake-pad elements (34; 134) are arranged so as to be displaceable in the direction of a braking force.

8. A braking device (1, 1') according to any one of claims 6 or 7, in which the brake-pad elements (34; 134) and the openings (32; 132) have a mutually corresponding prismatic shape.

9. A braking device (1, 1') according to claim 8, in which the brake-pad elements (34) are made kidney-shaped.

## Revendications

1. Dispositif de freinage (1, 1'), comportant un ensemble de disques de frein, dans lequel des garnitures de frein (34 ; 134 ; 34') sont disposées entre un premier et un deuxième flasque de frein (18, 20 ; 18', 20'), et une fente d'air (S) peut être réglée par plusieurs butées (22, 24), et un écarteur (42 ; 42' ; 42"), qui peut être déplacé transversalement à la direction de la force de freinage et peut être réglé de manière à agir en direction de la fente d'air, **caractérisé en ce que** l'écarteur (42 ; 42', 42") est réalisé de telle sorte qu'il peut être déplacé entre une première position, n'agissant pas sur la butée (22, 24 ; 22', 24'), et une deuxième position entre la butée (22, 24 ; 22', 24') et le flasque de frein (18, 20 ; 18', 20') agissant dans la direction de la force de freinage ou la direction de la fente d'air, de telle sorte que dans sa deuxième position, la fente d'air (S) est diminuée selon une dimension (D ; D') de l'écarteur, et permet ainsi de compenser une usure correspondante d'une garniture de frein (34 ; 134 ; 34').

2. Dispositif de freinage (1, 1') selon la revendication 1, dans lequel l'écarteur (42 ; 42'; 42") est réalisé d'un seul tenant et comporte dans chaque cas un évidement (46 ; 46' ; 46") dans la zone des butées (22, 24), sachant que, dans la première position, lesdits évidements (46 ; 46' ; 46") entourent les butées (22, 24) avec une zone (46a ; 46a' ; 46a") et dans la deuxième position, une zone de bordure (46b ; 46b' ; 46b") de l'évidement (46 ; 46' ; 46") avec l'épaisseur (D ; D') est disposée axialement entre la butée (22, 24) et le flasque de frein (18, 20 ; 18', 20').

3. Dispositif de freinage (1, 1') selon la revendication 1 ou 2, dans lequel l'écarteur (42 ; 42' ; 42") est disposé et réalisé de telle sorte que, pour sa fixation par l'intermédiaire d'un élément de fixation (44) dans sa première et/ou sa deuxième position, il peut être assemblé au flasque de frein (18, 20 ; 18', 20').

4. Dispositif de freinage (1, 1') selon la revendication 1, 2 ou 3, dans lequel l'écarteur (42 ; 42' ; 42") est réalisé mobile dans une direction de réglage (Y, Z) transversalement à un axe (14) orienté dans la direction de la force de freinage.

5. Dispositif de freinage (1, 1') selon la revendication 4, dans lequel l'écarteur (42 ; 42' ; 42") est réalisé sous la forme d'une bague rotative (42 ; 42') mobile autour de l'axe (14).

6. Dispositif de freinage (1, 1') selon l'une quelconque des revendications 1 à 5, lequel comporte un disque de frein (10, 110) avec plusieurs garnitures de frein (34 ; 134), qui sont disposées dans des ouvertures (32 ; 132) traversant de part en part le disque de frein (10, 110).

7. Dispositif de freinage (1, 1') selon la revendication 6, dans lequel les garnitures de frein (34 ; 134) sont disposées de manière mobile dans la direction d'une force de freinage.

8. Dispositif de freinage (1, 1') selon la revendication 6 ou 7, dans lequel les garnitures de frein (34 ; 134) et les ouvertures (32 ; 132) ont une forme prismatique correspondant les unes aux autres.

9. Dispositif de freinage (1, 1') selon la revendication 8, dans lequel les garnitures de frein (34) sont réniformes.
